# FASCICULE DE BREVET EUROPEEN

(11) **EP 2 707 567 B1**
(45) Date de publication et mention de la délivrance du brevet: **01.03.2017**
(21) Numéro de dépôt: 12720865.0
(22) Date de dépôt: 11.05.2012
(51) Int. Cl.: E21B 19/22, F16L 1/20, H02G 1/10, E21B 19/00, F16L 37/127, E21B 43/01, E21B 43/013

(54) **DISPOSITIF DE FIXATION D'UN PREMIER ÉLÉMENT SUR UNE BRIDE DE RETENUE D'UN DEUXIÈME ÉLÉMENT, INSTALLATION ET PROCÉDÉ ASSOCIÉS**
VORRICHTUNG ZUR BEFESTIGUNG EINES ERSTEN BAUTEILS AN EINEM HALTEFLANSCH EINES ZWEITEN ELEMENTS, ZUGEHÖRIGE ANLAGE UND VERFAHREN
DEVICE FOR ATTACHING A FIRST ELEMENT TO A RETAINING FLANGE OF A SECOND ELEMENT, ASSOCIATED INSTALLATION AND METHOD

(30) Priorité: 13.05.2011 FR 1154169
(43) Date de publication de la demande: 19.03.2014
(73) Titulaire: Technip France, 92400 Courbevoie (FR)
(72) Inventeur: VERGNE, Frédérick, F-91160 Gif Sur Yvette (FR); ROUTEAU, Sylvain, F-92210 Saint Cloud (FR)
(74) Mandataire: Lavoix
(86) Numéro de dépôt international: PCT/EP2012/058799
(87) Numéro de publication internationale: WO 2012/156320

(56) Documents cités:
- GB-A- 2 010 429
- GB-A- 2 094 856
- GB-A- 2 299 637
- US-A- 3 325 190
- US-A- 3 492 027

## Description

La présente invention concerne un dispositif de fixation d'un premier élément sur une bride de retenue d' un deuxième élément, selon le préambule de la revendication 1.

Un tel dispositif est destiné notamment à la fixation, sur un tube de guidage de type « I Tube » ou « J Tube », d'un limiteur de courbure monté sur une conduite flexible. Le tube de guidage est monté solidaire par exemple d'un ensemble de surface flottant.

Un tel dispositif est avantageusement utilisé dans une installation d'exploitation d'hydrocarbures dans une étendue d'eau comprenant un ensemble de fond fixé sur le fond de l'étendue d'eau, et une structure flottante ou immergée tel qu'un support naval de surface, une plateforme semi-submersible, une colonne verticale flottante ou un navire. L'installation comporte au moins un flexible raccordant l'ensemble de fond à la structure.

Le flexible est par exemple une conduite flexible de transport de fluide, désignée par le terme anglais « riser ». De telles conduites sont par exemple celles décrites dans les documents normatifs publiés par l'American Petroleum Institute, API 17J et API RP 17B, bien connus de l'homme du métier.

Plus généralement, le flexible peut être un faisceau composite de type « bundle » ou un ensemble de câbles électriques et/ou optiques (ombilical).

Le dispositif de fixation du type précité est utilisé notamment lors de l'installation et du raccordement du flexible sur l'ensemble de surface. Un dispositif du type précité est décrit par exemple dans WO 98/23845.

Le flexible décrit dans ce document est muni d'un raidisseur fixé sur la conduite flexible par l'intermédiaire de goupilles frangibles.

Un dispositif de fixation axiale du raidisseur est monté à l'extrémité inférieure du tube creux. Ce dispositif comprend des crochets déployables radialement pour permettre le passage d'une collerette de retenue du raidisseur. Lorsque le raidisseur est introduit dans le tube, les crochets passent sous la collerette et retiennent alors le raidisseur.

Le flexible peut ensuite être détaché du raidisseur par rupture des goupilles frangibles.

Un tel dispositif ne donne pas entière satisfaction. En effet, pour mettre en place les crochets, il est nécessaire d'intervenir sur le dispositif de fixation avec un plongeur ou un véhicule télécommandé. D'autre part, ceci ne permet pas de pré-contraindre le dispositif de verrouillage.

En outre, le verrouillage étant réalisé par deux crochets opposés, sa précision n'est pas optimale, et le dispositif ne permet pas de compenser d'éventuelles dérives d'alignement lors de l'insertion du raidisseur dans le tube de guidage.

GB 2 010 429 décrit un dispositif de fixation d'un tuyau sur une bride.

Un but de l'invention est donc d'obtenir un dispositif de fixation d'un premier élément sur une bride de retenue d'un deuxième élément, notamment d'un élément de retenue d'un flexible dans un tube de guidage qui soit particulièrement simple d'utilisation, tout en étant très fiable et sans intervention de plongeurs.

A cet effet, l'invention a pour objet un dispositif du type précité, caractérisé en ce que le ou chaque élément de connexion comporte un système autobloquant et, un organe mobile d'accrochage, l'organe d'accrochage étant monté mobile dans le système autobloquant, le dispositif de fixation comprenant un actionneur de déplacement de l'organe d'accrochage dans le système autobloquant entre une position déployée et une position rétractée dans le système autobloquant.

Le dispositif selon l'invention peut comprendre l'une ou plusieurs des caractéristiques des revendications 2 à 11 ou des caractéristiques suivantes, prise(s) isolément ou suivant toutes combinaisons techniquement possibles :
- il comporte au moins un organe déployable d'écartement radial du ou de chaque élément de connexion vers sa configuration écartée destiné à être disposé entre le flexible et le ou chaque élément de connexion ;
- le système autobloquant comprend un fût sensiblement cylindrique délimitant une cavité cylindrique de guidage axial de l'organe d'accrochage, la tige présentant une section transversale légèrement supérieure à la section transversale de la cavité du fût ;
- en l'absence de pression hydraulique dans le fût, la tige est maintenue immobile en position par rapport au fût, le déplacement de la tige et de l'organe d'accrochage étant autorisé lorsqu'une pression hydraulique est fournie dans la cavité.

L'invention a également pour objet une installation d'exploitation de fluide selon la revendication 12

L'installation selon l'invention peut comprendre les caractéristiques de la revendication 13 L'invention a également pour objet un procédé selon les revendications 14 ou 15

L'invention sera mieux comprise à la lecture de la description qui va suivre, donnée uniquement à titre d'exemple, et faite en se référant aux dessins annexés, sur lesquels :
- la figure 1 est une vue schématique en coupe partielle suivant un plan vertical d'une installation d'exploitation de fluide, comportant un dispositif de fixation d'un raidisseur de flexible sur un tube de guidage creux selon l'invention ;
- la figure 2 est une vue de côté du dispositif de fixation selon l'invention ;
- la figure 3 est une vue partielle en coupe suivant un plan vertical III du dispositif représenté sur la figure 2 ;
- la figure 4 est une vue partielle en perspective de trois-quarts face d'un élément de connexion du dispositif de fixation représenté sur la figure 2 ;
- la figure 5 est une vue prise en coupe suivant un plan vertical médian du dispositif de fixation, lors de l'accostage d'un raidisseur à l'extrémité inférieure du tube de guidage ;
- la figure 6 est une vue analogue à la figure 5 dans une première phase de raccordement du dispositif de fixation ;
- la figure 7 est une vue analogue à la figure 5 lors d'une deuxième phase du raccordement ;
- la figure 8 est une vue analogue à la figure 5, lors du verrouillage du raidisseur sur le tube de guidage ;
- la figure 9 illustre un accostage incliné du raidisseur suivant un premier angle par rapport au tube de guidage ;
- la figure 10 est une vue analogue à la figure 9 suivant une inclinaison opposée à celle de la figure 9 ;
- la figure 11 est une vue en perspective de trois-quarts face d'une variante d'élément de connexion pour un ensemble de fixation selon l'invention ; et
- la figure 12 est une vue en perspective illustrant une variante de dispositif de fixation.

Dans tout ce qui suit, les termes « amont » et « aval » s'entendent généralement par rapport au sens normal de circulation d'un fluide dans une conduite.

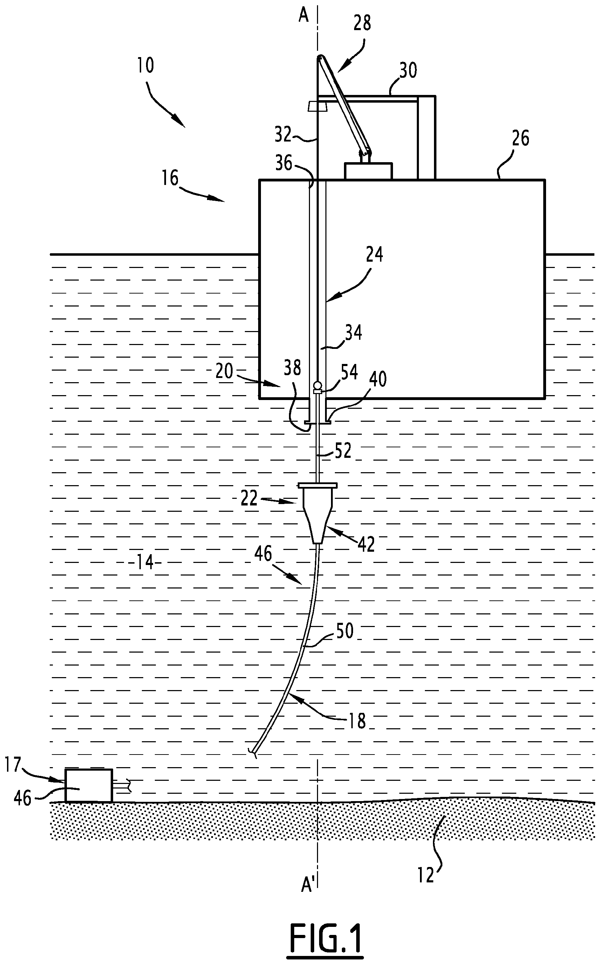

Une première installation 10 d'exploitation de fluide selon l'invention est représentée sur la figure 1. Cette installation 10 est par exemple destinée à recueillir un fluide, notamment des hydrocarbures prélevés dans le fond 12 d'une étendue d'eau 14.

L'installation 10 comporte un ensemble de surface 16 flottant sur l'étendue d'eau 14, un ensemble de fond 17 disposé sur le fond 12 de l'étendue d'eau 14, et un flexible 18 destiné à raccorder l'ensemble de surface 16 à l'ensemble de fond 17, le flexible 18 étant muni d'un premier élément 20 de retenue et/ou de guidage rapporté sur le flexible 18.

L'installation 10 comporte en outre un premier dispositif de fixation 22 de l'élément de retenue 20 sur un deuxième élément formé par un tube de guidage 24 présent sur l'ensemble de surface 16.

L'étendue d'eau 14 est par exemple un lac, une mer ou un océan. La profondeur de l'étendue d'eau 14 au droit de l'ensemble de surface 16 est par exemple comprise entre 15 mètres et 3000 mètres.

L'ensemble de surface 16 est par exemple un support naval de surface, une plateforme semi-submersible, une colonne verticale flottante (désignée par le terme anglais « SPAR ») ou un navire. En variante, l'ensemble de surface 16 est une structure rigide de type « jacket » ou une structure oscillante assujettie au fond de la mer.

En variante encore, l'ensemble 16 est totalement immergé sous la surface de l'étendue d'eau 14.

En variante, l'ensemble 16 peut se connecter au dessus de la surface de l'eau, à l'air libre.

L'ensemble de surface 16 présente une surface supérieure 26 sur laquelle est monté un engin de manoeuvre 28 du flexible 18.

L'ensemble de surface 16 comprend au moins un manifold 30 adapté pour le raccordement d'une extrémité supérieure du flexible 18.

L'engin de manoeuvre 28 est par exemple formé par un treuil comportant un câble 32 destiné à tracter le flexible 18 à travers l'étendue d'eau 14 et à travers le tube de guidage 24.

Le tube de guidage 24 est dans l'exemple représenté sur la figure 1 un tube droit du type « I-tube ». En variante, le tube 24 est un tube de type « J-tube » qui présente une extrémité inférieure coudée. Le tube 24 délimite un passage intérieur 34 de circulation du flexible 18.

Il débouche à son extrémité supérieure 36 au dessus de l'étendue d'eau 14 et à son extrémité inférieure 38 dans l'étendue d'eau 14. Le tube 24 est muni, au voisinage de son extrémité inférieure 38, d'une bride de retenue 40 faisant saillie radialement à l'écart de l'axe A-A' du tube.

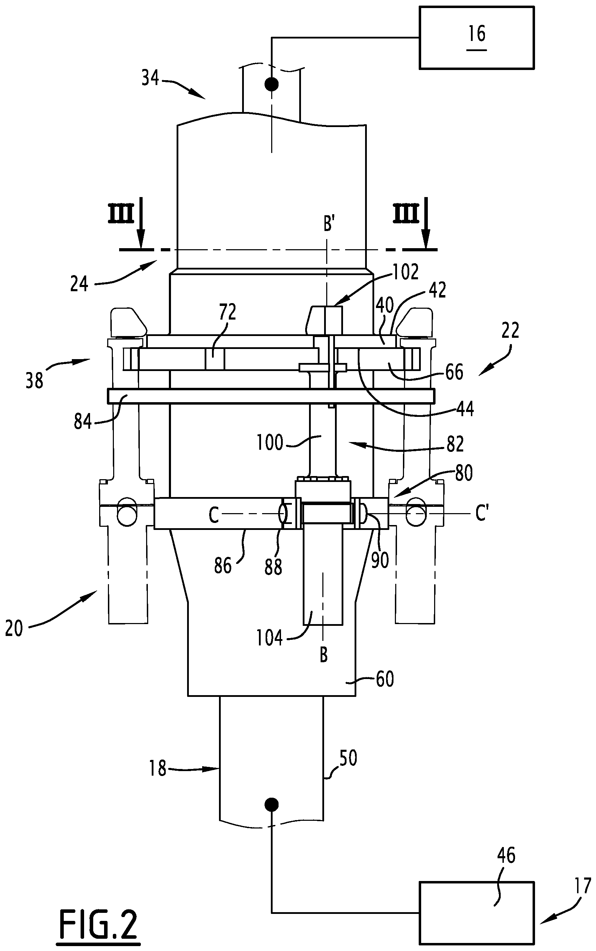

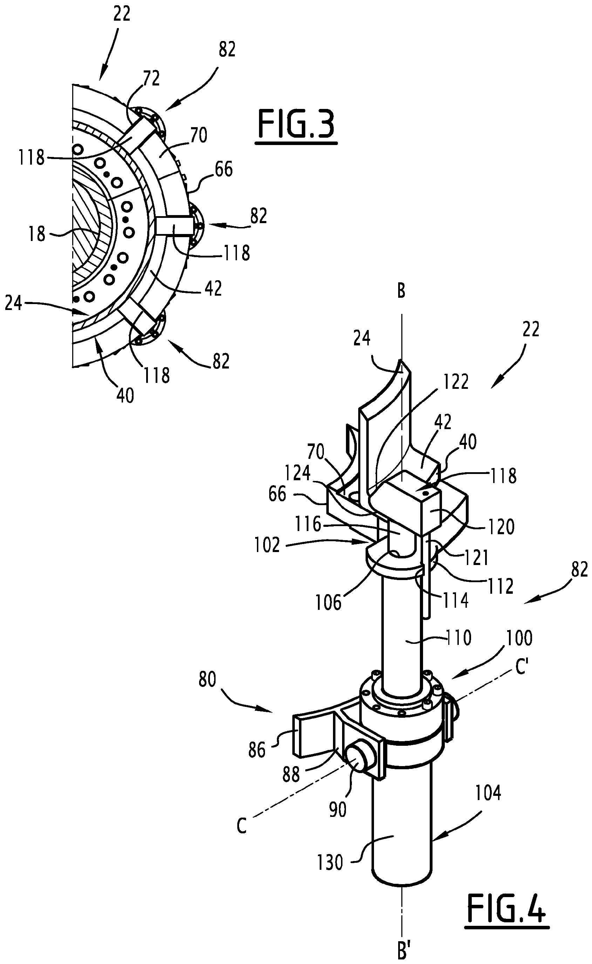

Comme illustrée par les figures 2, 4 et 5, la bride 40 définit une surface supérieure 42 d'accrochage du dispositif de fixation 22 et une surface inférieure 44 annulaire d'accostage de l'élément de retenue 20, visible sur la figure 4.

En référence à la Figure 1, l'ensemble de fond 17 comporte des moyens 46 de collecte de fluide. Une extrémité inférieure du flexible 18 est raccordée aux moyens de collecte 46.

Dans l'exemple représenté sur les figures, le flexible 18 est formé d'une conduite tubulaire flexible 50 délimitant intérieurement un canal 52 de circulation de fluide. La conduite 50 est aussi appelée « colonne montante » ou « riser » et est destinée à raccorder hydrauliquement les moyens de collecte 46 situés au fond de l'étendue d'eau au manifold 30 situé sur l'ensemble de surface 16.

Une telle conduite flexible 50 est par exemple décrite dans les documents normatifs publiés par l'American Petroleum Institute, API 17J et API RP17B, bien connus de l'homme du métier.

Dans une variante, le flexible 18 est un faisceau composite de type ombilical ou « integrated service ombilical » (ISU).

En variante, le flexible 18 peut être un faisceau de câbles électriques ou/et optique ou/et un faisceau de lignes hydrauliques.

À son extrémité supérieure, le flexible 18 comporte dans cet exemple une tête 54 de raccordement destinée à être connectée à l'engin de manoeuvre 28, puis au manifold 30.

Le flexible 18 est par exemple déroulé et immergé dans l'étendue d'eau 14 à partir d'un navire en surface, ou est stocké sur le fond 12 de l'étendue d'eau 14.

L'élément de retenue 20 forme un limiteur de courbure propre à empêcher une torsion trop importante du flexible 18 susceptible d'engendrer une dégradation du flexible 18.

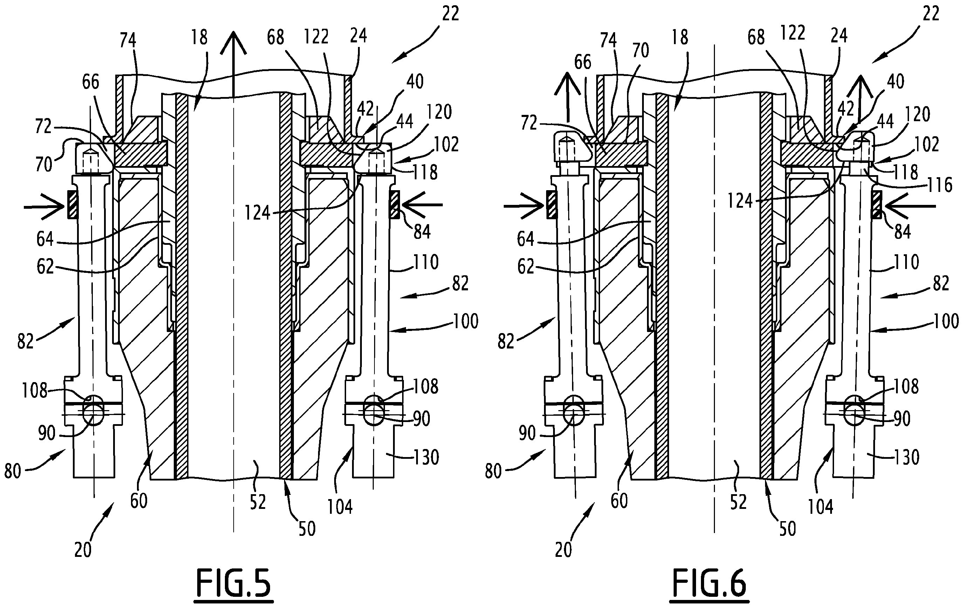

Cet élément de retenue 20 comporte, de haut en bas sur la figure 5, un raidisseur 60, une chemise 62 de renforcement du raidisseur 60, un manchon 64 d'insertion du flexible 18, et une bride 66 d'accostage sur le tube 24.

L'élément de retenue 20 comporte en outre un organe d'accostage 68 (ou de centrage) et des moyens (non représentés) de solidarisation du flexible 18 sur l'élément de retenue 20.

Le raidisseur 60 est formé par un bloc annulaire d'axe A-A' vertical sur la Figure 3, correspondant à l'axe local du flexible 18. Ce bloc est par exemple moulé en matière plastique telle que du polyuréthane. Il est couvert à son extrémité supérieure par la chemise 62 de renforcement qui recouvre partiellement la surface intérieure, la surface supérieure, et la surface extérieure du bloc.

Le raidisseur 60 présente une forme tronconique partielle convergeant vers le bas. Le raidisseur 60 et la chemise 62 imposent au flexible 18 un rayon de courbure supérieur au rayon de courbure minimal que pourrait occuper ce flexible 18 dans la région où le flexible 18 est inséré dans le raidisseur 60.

Le manchon 64 fait saillie vers le haut à partir de la chemise de renforcement 62.

Il présente un diamètre intérieur sensiblement conjugué au diamètre extérieur du flexible 18.

La bride d'accostage 66 fait saillie radialement à partir du manchon 64. Elle est fixée par exemple dans une gorge annulaire ménagée dans la surface périphérique extérieure du manchon 64. La bride d'accostage 66 délimite une surface supérieure 70 d'accostage sur la surface inférieure 44 de la bride de retenue 40.

Comme illustré par les figures 2 et 3, la bride d'accostage 66 peut présenter une pluralité d'encoches radiales 72 débouchant extérieurement pour recevoir des éléments de connexion du dispositif de fixation 22. Les encoches radiales 72 sont réparties angulairement autour de l'axe A-A' à la périphérie de la bride 66.

L'organe d'accostage 68 est formé par un anneau disposé sur la bride 66. Il présente une forme sensiblement tronconique et délimite une surface convergente 74 vers l'axe A-A' en se déplaçant vers le haut.

Les moyens de solidarisation sont par exemple des moyens propres à maintenir axialement le flexible 18 dans l'élément 20 de manière libérable. Ces moyens sont par exemple des goupilles frangibles ou un ensemble réversible de maintien tel que décrit dans WO 2009/092 933 ou encore un système d'écrous largables. En variante, les moyens de solidarisation sont des moyens de fixation permanente et le flexible est fixé de manière permanente sur l'élément de retenue 20 par des câbles par exemple.

En référence aux Figures 2 à 8, le dispositif de fixation 22 comporte un support 80 qui, dans cet exemple, est solidaire de l'élément de retenue 20, et une pluralité d'éléments de connexion 82 montés mobiles sur le support 80.

Comme illustré par les figures 2 et 5, le dispositif 22 comporte en outre un organe 84 de sollicitation élastique des éléments de connexion 82.

Dans l'exemple représenté sur les figures 2 à 4, le support 80 porte une pluralité d'éléments de connexion 82 répartis angulairement à sa périphérie.

Les éléments de connexion 82 sont mobiles radialement par pivotement autour d'un axe C-C' perpendiculaire à l'axe A-A' entre une configuration écartée de mise en place et une configuration contractée de maintien. En outre, dans l'exemple représenté sur les figures, chaque élément de connexion 82 est déplaçable axialement par rapport au support 80 sur une course donnée entre une position haute et une position basse.

En référence à la Figure 4, le support 80 comporte une bague 86 périphérique d'axe A-A' et, pour chaque élément de connexion 82, une chape de retenue 88 et un axe d'articulation 90 monté transversalement à travers la chape 88.

Le support 80 délimite ainsi un espace central d'axe A-A' à travers lequel passe le flexible 18.

Comme illustré par la figure 4, la chape 88 fait saillie radialement vers l'extérieur à partir de la bague 86. L'axe 90 s'étend perpendiculairement à un axe radial par rapport à l'axe A-A'.

Dans l'exemple représenté sur les figures 2 à 7, chaque élément de connexion 82 comporte un guide formé par un système autobloquant 100 monté mobile sur le support 80, un organe d'accrochage 102 monté mobile dans le système autobloquant 100 entre une position déployée et une position rétractée, et un actionneur 104 de déplacement de l'organe d'accrochage 102 entre sa position déployée et sa position rétractée.

Le système autobloquant 100 est monté rotatif autour d'un axe C-C' sur une chape 88 du support 80 autour de l'axe 90. Il définit une cavité cylindrique 106 de guidage axial de l'organe d'accrochage 102 et un passage oblong 108 de guidage axial du guide 100, visible sur la Figure 5. L'axe 90 est inséré dans le passage 108.

Dans cet exemple, le système autobloquant 100 comporte un fût 110 sensiblement cylindrique délimitant la cavité 106. La cavité 106 débouche à l'extrémité libre du fût 110 au niveau d'une collerette d'extrémité 112. La collerette 112 délimité une encoche 114 d'indexation angulaire de l'organe d'accrochage 102.

L'organe d'accrochage 102 comporte une tige 116 formant piston montée mobile dans le système autobloquant 100 et une tête d'accrochage 118 fixée à l'extrémité libre de la tige 116.

Comme illustré par les figures 4 et 5, la tête 118 comporte une butée 120 et un doigt 121 d'indexation angulaire reçu dans l'encoche 114.

La butée 120 présente un pan incliné qui définit une surface divergente 122 latérale s'étendant vers l'axe A-A'. La surface 122 permet le guidage de l'organe d'accrochage 102 lors de son accostage sur le tube de guidage 24.

La butée 120 définit en outre une surface inférieure 124 d'accrochage destinée à s'appliquer sur la surface supérieure 42 de la collerette d'appui 40.

Le doigt 121 est reçu dans l'encoche 114 pour bloquer angulairement l'organe d'accrochage 102 autour de son axe B-B' de déplacement dans le système autobloquant.

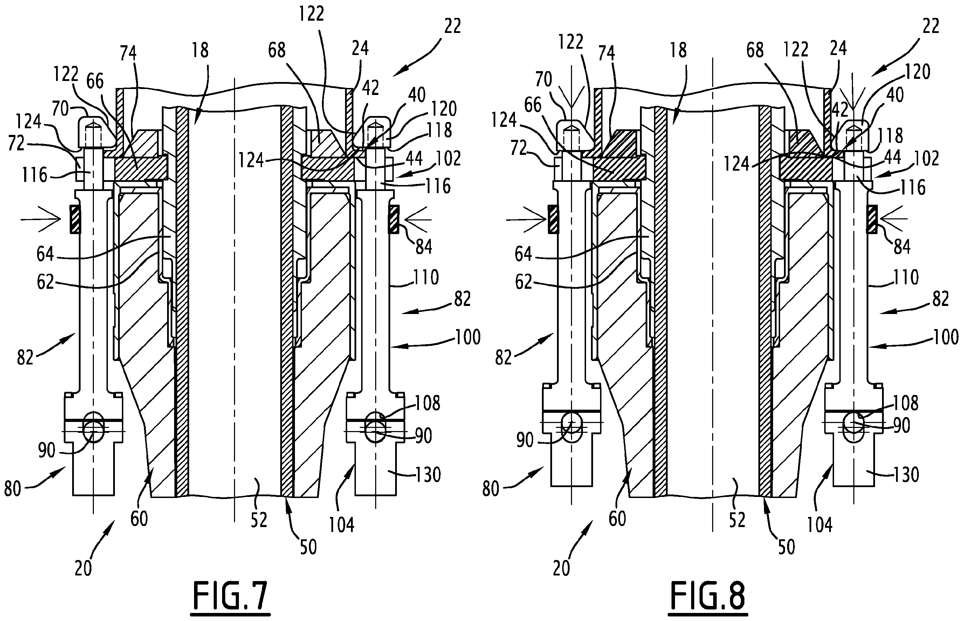

L'organe d'accrochage 102 est déplaçable dans le système autobloquant 100 le long de l'axe B-B' entre une position rétractée représentée sur la figure 5 et une position déployée représentée sur la figure 7.

L'organe d'accrochage 102 est apte à occuper, entre sa position déployée et sa position rétractée au moins une position intermédiaire en terme de course représentée sur la figure 8.

Dans la position rétractée, la longueur de tige 116 disposée hors de la cavité 106 est minimale. La tête 118 est située relativement au voisinage de l'extrémité libre du système autobloquant 100. Dans la position déployée, la tige 116 est partiellement extraite hors de la cavité 106 du système autobloquant 100 et la longueur de tige 116 extraite hors de la cavité 106 est maximale.

Dans ce mode de réalisation, l'organe de sollicitation élastique 84 est formé par une bande élastique circonférentielle ceinturant les éléments de connexion 82 autour de l'axe A-A'.

L'organe de sollicitation élastique 84 est propre à exercer en permanence une force de sollicitation radiale de chaque élément de connexion 82 vers sa configuration contractée de maintien.

La bande élastique est par exemple appliquée radialement à l'extérieur de chaque guide 100.

L'actionneur 104 comporte un vérin 130 de déplacement, propre à agir sur la tige 116 de chaque organe d'accrochage 102. Le vérin 130 est avantageusement un vérin hydraulique commandé à distance par une centrale hydraulique située de préférence en surface.

La centrale hydraulique est raccordée au vérin 130 par des lignes hydrauliques indépendantes. La manoeuvre du vérin 130 et le déplacement des organes d'accrochage 102 peuvent donc être effectués depuis la surface, sans qu'il soit nécessaire de descendre un plongeur ou un véhicule télécommandé hors de la zone de l'ensemble de surface.

Dans une variante avantageuse, le système autobloquant maintient par défaut la tige 116 de chaque organe d'accrochage 102 en position par coopération mécanique.

A cet effet, la tige 116 présente une section transversale légèrement supérieure à la section transversale de la cavité 106 du fût.

En l'absence de pression hydraulique dans le fût 110, la tige 116 est donc maintenue immobile en position par rapport au fût 110 le long de l'axe B-B'.

Pour autoriser le déplacement de la tige 116, et plus généralement de l'organe d'accrochage 102 sous l'effet du vérin 130, une pression hydraulique est fournie dans la cavité 106, autorisant ainsi le déplacement de la tige 116.

Dans ce cas, le vérin 130 peut être disposé en ligne sous le système autobloquant 100.

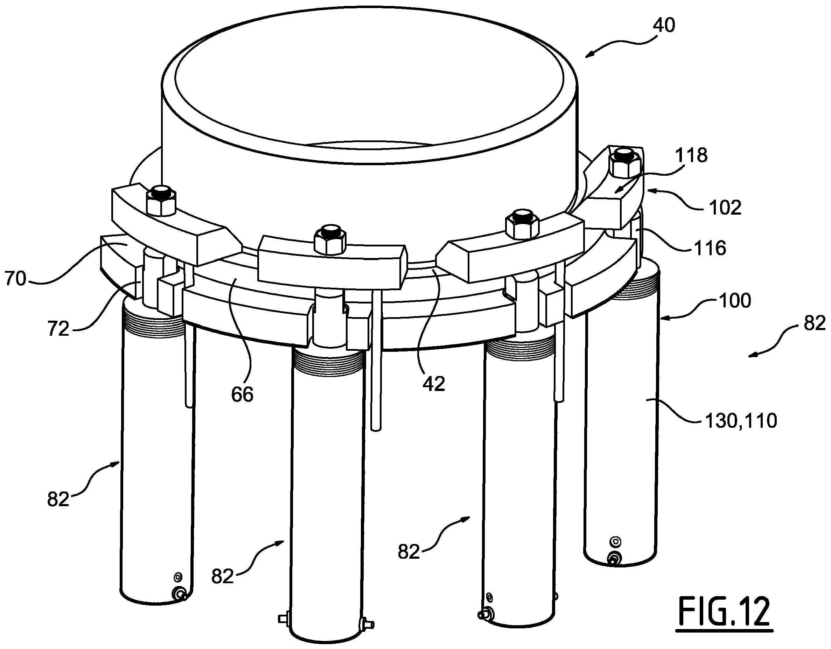

Dans une variante représentée sur la Figure 12, le système autobloquant 100 est intégré dans le vérin 130 pour permettre une compacité accrue et une longueur réduite de l'ensemble formé par l'organe d'accrochage 102, par le fût 110, et par le vérin 130.

De tels systèmes autobloquants sont associés à un vérin 130 et sont fournis par exemple par la société française QUIRI. Un exemple de système autobloquant 100 est décrit dans la demande de brevet EP 0 534 879 de cette société.

Le fonctionnement du dispositif de fixation 22 lors du raccordement de l'élément de retenue 20 sur le tube de guidage 24 va maintenant être décrit.

Initialement, le flexible 18 est déployé dans l'étendue d'eau 14 et est raccordé au câble 32 de l'engin de manoeuvre 28.

A cet effet, le câble 32 est descendu dans le tube de guidage 24 depuis son extrémité supérieure 36 vers son extrémité inférieure 38 et est connecté sur l'extrémité supérieure du flexible 18.

L'élément de retenue 20 a été préalablement fourni et fixé au voisinage de l'extrémité supérieure du flexible 18. A cet effet, le flexible 18 a été introduit dans le raidisseur 60, dans la chemise 62 à travers le manchon 64 puis a été fixé axialement par rapport à l'élément de retenue 20 par l'intermédiaire des moyens de fixation (non représentés).

L'élément de retenue 20 est alors situé au dessous de l'extrémité inférieure 38 du tube de guidage 24, à l'écart axialement de la bride de retenue 40 le long de l'axe vertical A-A'.

Le dispositif de fixation 22 est présent sur l'élément de retenue 20. Comme illustré par la Figure 5, les éléments de connexion 82 font saillie vers le haut à partir du support 80, sensiblement parallèles à l'axe A-A' du flexible 18. Ils sont maintenus dans leur configuration contractée par l'organe de sollicitation élastique 84.

Les organes d'accrochage 102 occupent par ailleurs leur position rétractée dans les systèmes autobloquant 100. Les systèmes 100 occupent leur position basse par rapport au support 80.

Puis, l'engin de manoeuvre 28 est activé pour remonter le câble 32 et rapprocher l'extrémité supérieure du flexible 18 de l'extrémité inférieure 38 du tube 24.

Ensuite, la tête 54 est introduite dans le tube 24 par l'extrémité inférieure 38 du tube 24 et est remontée vers l'extrémité supérieure 36 du tube 24. Comme illustré par la Figure 5, l'élément de retenue 20 accoste alors sous la bride de retenue 40.

Avantageusement, l'organe d'accostage 68 coopère avec le tube 24 pour aligner le flexible 18 et l'élément de retenue 20 dans l'axe du tube 24. Puis, la surface inférieure 44 de la bride de retenue 40 entre en contact avec la surface supérieure 70 de la bride d'accostage 66.

Le déplacement vers le haut du câble 32 est alors stoppé.

Ensuite, le vérin hydraulique 130 de chaque élément de retenue 82 est activé pour déployer chaque organe d'accrochage 102 vers sa position déployée. A cet effet, une pression hydraulique est fournie dans la cavité 106 pour dilater le fût 100 et libérer la tige 116.

Les organes d'accrochage 102 se déplacent alors axialement vers le haut par rapport au support 80, puis entrent en contact avec la bride de retenue 40. La surface latérale 122 coopère alors avec la surface inférieure 40 pour écarter chaque organe d'accrochage 102 radialement de l'axe A-A' par pivotement autour de l'axe C-C' de rotation, à l'encontre de l'organe de sollicitation élastique 84 (Figure 6).

Les têtes 118 passent donc latéralement autour du bord radial extérieur de la collerette 44. Puis, lorsque la surface inférieure 124 de chaque tête 118 passe au-dessus de la surface supérieure 42, les organes d'accrochage 102 sont ramenés radialement vers l'axe A-A' au contact de la surface extérieure du tube 24, au dessus de la collerette 40 par le rappel élastique engendré par l'organe de sollicitation élastique 84 (Figure 7) de type sangle placé à l'extérieur et tout autour des éléments de retenue 82.

Une pré-connexion est alors réalisée, puisque les butées 120 sont disposées en appui sur la surface supérieure 42.

Ensuite, les vérins 130 sont à nouveau activés pour déplacer chaque organe d'accrochage 102 vers le bas et le faire passer dans sa position intermédiaire de serrage. Une pression hydraulique est alors fournie dans la cavité 106 pour dilater le fût 100 et libérer la tige 116.

Les systèmes autobloquant 100 remontent alors de leur position basse vers leur position haute pour effectuer le serrage des organes d'accrochage 102. L'élément de retenue 20 est alors verrouillé fermement sur la bride de retenue 40 du tube de guidage 24 entre la surface supérieure 42 de la bride de retenue 40, et l'axe 90 solidaire du support 80.

La pression hydraulique fournie par le vérin 130 peut alors être supprimée. A cet effet, la pression hydraulique fournie dans la cavité 106 est supprimée pour ne plus dilater le fût 100 et bloquer ainsi la tige 116.

Les tiges 116 des organes 102 sont alors fermement maintenues en position dans les fûts 110 des systèmes autobloquants 100.

Dans une variante, les moyens de solidarisation (non-représentés) du flexible 18 sur l'élément de retenue 20 sont ensuite désactivés et l'extrémité supérieure du flexible 18 est remontée en surface pour être raccordée sur le manifold 30, l'élément de retenue 20 restant immobile par rapport au tube de guidage 24.

Dans le cas où le flexible 18 est une conduite de transport de fluide, son extrémité inférieure est raccordée aux moyens de collecte 46 sur l'ensemble de fond 17. Un passage continu de fluide est établi à travers le flexible 18 depuis l'ensemble de fond 17 vers l'ensemble de surface 16.

Le dispositif de fixation 22 selon l'invention permet donc de réaliser un verrouillage de grande précision de l'élément de retenue 20 sur le tube de guidage 24, compte tenu de la répartition des forces sur l'ensemble des systèmes autobloquants 100 associés à chaque élément de connexion 82. Le dispositif de fixation 22 est ainsi capable de supporter des forces très importantes (notamment en ce qui concerne le cisaillement et les moments induits par la tension du flexible et la rigidité du raidisseur).

Le dispositif de fixation 22 présente un comportement en fatigue amélioré, compte tenu de la pré-connexion possible de chaque organe d'accrochage 82 sur la bride de retenue 40, avant le verrouillage définitif, grâce à la mise en précontrainte par serrage des deux brides 40, 66.

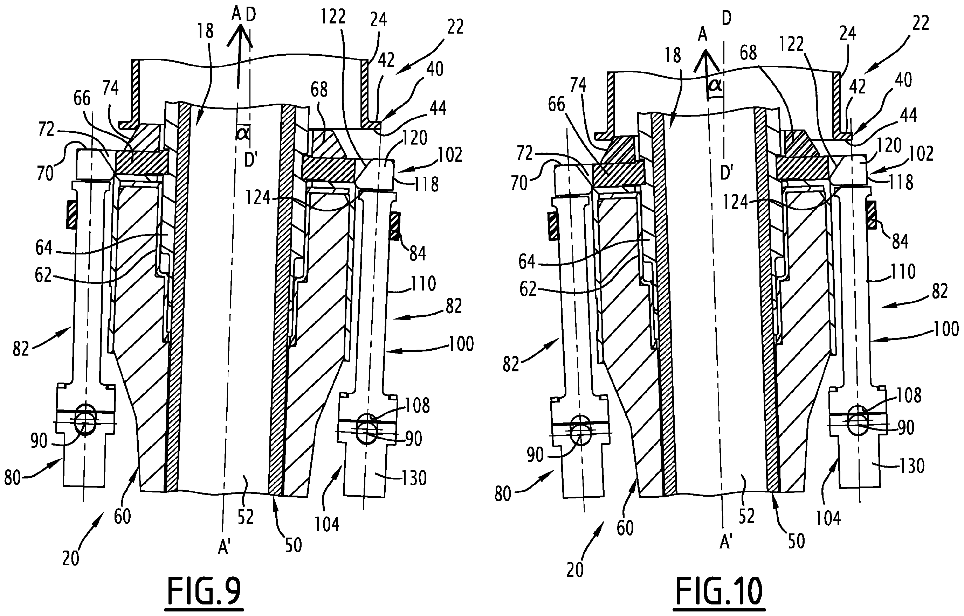

Comme illustré sur les figures 9 et 10, le dispositif 22 est en outre capable de compenser des écarts angulaires possibles entre l'axe A-A' du flexible 18 et de l'élément de retenue 20 et l'axe D-D' du tube de guidage 24, que cet écart axial soit dans un premier sens (figures 9) ou dans un deuxième sens (figure 10).

La présence d'éléments de connexion 82 comportant des vérins hydrauliques 130 fiables, tels que ceux proposés par la société QUIRI, rend l'opération de connexion particulièrement simple et fiable. En particulier, la présence de systèmes autobloquants, pour lesquels il n'est pas nécessaire de fournir en permanence une pression hydraulique, rend l'opération de bridage particulièrement simple et fiable.

En outre, la présence d'un plongeur et/ou d'un véhicule télécommandé n'est pas nécessaire au voisinage de l'extrémité inférieure 38 du tube 24, ce qui limite le coût de l'opération et rend la connexion plus rapide et plus sécurisante.

Dans une variante, un vérin gonflable (non représenté) formé d'une vessie est disposé dans l'espace annulaire défini entre les systèmes autobloquants 100 et la surface extérieure du raidisseur 60. Le vérin gonflable est apte à être gonflé pour provoquer le passage de chaque élément de connexion 82 depuis sa configuration rétractée vers sa configuration écartée à l'encontre de l'organe de sollicitation élastique 84. Ceci permet notamment de déverrouiller les éléments de connexion 82 en poussant les têtes 118 radialement vers l'extérieur à l'écart de l'axe A-A'.

Dans une autre variante (non représentée), le support 80 est monté solidaire du tube 24, les éléments de connexion 82 font saillie vers le bas et sont aptes à coopérer avec la bride de retenue 66 présente sur l'élément de retenue 20.

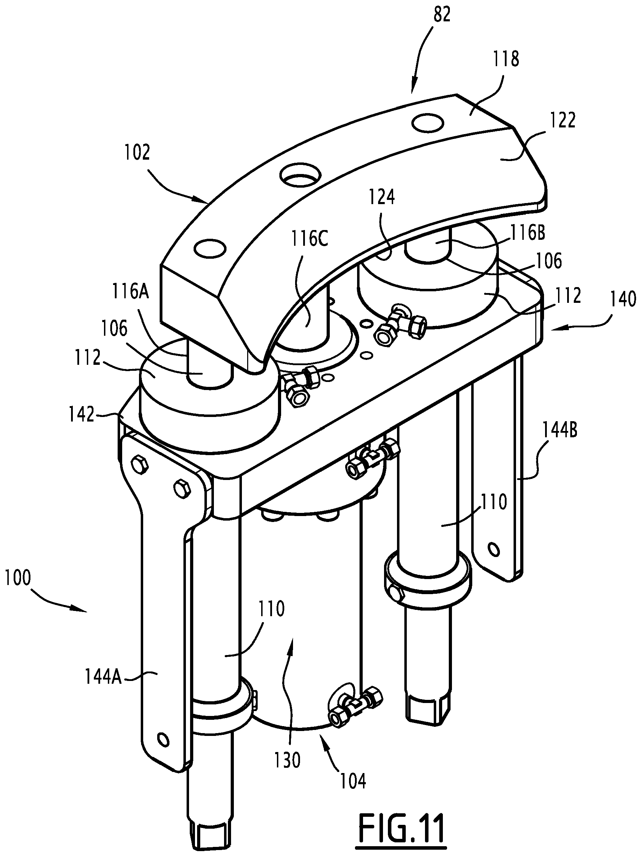

Dans une autre variante, représentée sur la Figure 11, chaque élément de connexion 82 comporte un châssis 140 portant, disposés en parallèle, au moins un système autobloquant 100 et le vérin 130.

Dans une autre variante plus compacte (non représentée), le système autobloquant 100 est logé dans le vérin 130.

Dans l'exemple représenté sur la Figure 11, le châssis 140 comporte une plaque support 142 et deux bras 144A, 144B d'articulation sur le support 80.

La plaque support 142 porte deux fûts 110 disposés parallèlement l'un à l'autre, chaque fût 110 délimitant une cavité 106. Le vérin 130 est disposé sous la plaque support 142 entre les deux fûts 110. Les supports de vérins ne reprennent pas d'effort de bridage, celui-ci reste entre la tête d'accrochage et la collerette haute du système autobloquant

L'organe d'accrochage 102 présente une tête en forme d'arc de cercle et une pluralité de tiges 116A, 116B, 116C parallèles. Les tiges latérales 116A et 116B sont disposées respectivement dans les cavités 106 des fûts 110. La tige centrale 116C est disposée dans le vérin 130 pour actionner le déplacement de l'organe d'accrochage 102 depuis sa position rétractée vers sa position déployée. La tête en forme d'arc de cercle est optimisée afin de répartir uniformément sur la bride 40 la précontrainte induite par les vérins 130 et maintenue par le système autobloquant 100.

Ce dispositif 122 diminue la longueur de l'organe d'accrochage 102, tout en offrant un guidage particulièrement efficace de l'organe d'accrochage 102.

Le dispositif selon l'invention a été décrit pour la fixation d'un raidisseur sur le tube de guidage (I-tube). Mais l'invention pourrait s'appliquer à la connexion par bridage d'autres systèmes sous marins soumis par exemple à des pressions importantes et nécessitant un joint hydraulique.

## Revendications

1. Dispositif (22) de fixation axiale d'un premier élément (20) sur une bride de retenue (40) d'un deuxième élément (24), le premier élément (20) et le deuxième élément (24) étant destinés à être immergés dans une étendue d'eau (14), le dispositif (22) étant du type comprenant :
- un support (80) destiné à être fixé sur le premier élément (20),
- au moins un élément de connexion (82) porté par le support (80), l'élément de connexion (82) étant destiné à s'engager sur la bride de retenue (40) du deuxième élément (20), l'élément de connexion (82) étant monté mobile radialement par rapport au support (80) entre une configuration écartée de mise en place et une configuration contractée de maintien des éléments de connexion (82) sur le deuxième élément (24) ;
**caractérisé en ce que** le ou chaque élément de connexion (82) comporte un système autobloquant (100) et un organe mobile (102) d'accrochage, l'organe d'accrochage (102) étant monté mobile dans le système autobloquant (100), le dispositif de fixation (22) comprenant un actionneur (104) de déplacement de l'organe d'accrochage (102) dans le système autobloquant (100) entre une position déployée et une position rétractée dans le système autobloquant (100).

2. Dispositif (22) selon la revendication 1, **caractérisé en ce que** l'un parmi le premier élément et le deuxième élément est un élément de retenue (20) de flexible comportant avantageusement un raidisseur de flexible, l'autre parmi le premier élément et le deuxième élément étant un tube de guidage creux (24), le support (80) délimitant un espace central de passage du flexible.

3. Dispositif (22) selon la revendication 1 ou 2, **caractérisé en ce que** l'actionneur (104) est formé par un vérin hydraulique (130).

4. Dispositif (22) selon l'une quelconque des revendications précédentes, **caractérisé en ce que** le système autobloquant (100) est monté pivotant par rapport au support (80) entre la configuration contractée de maintien et la configuration écartée de mise en place.

5. Dispositif (22) selon l'une quelconque des revendications précédentes, **caractérisé en ce qu'**il comporte un organe (84) de sollicitation élastique de chaque élément de connexion (82) vers la configuration contractée de maintien.

6. Dispositif (22) selon l'une quelconque des revendications précédentes, **caractérisé en ce que** le système autobloquant (100) est monté mobile axialement par rapport au support (80) entre une position basse et une position haute suivant un axe local du support (80).

7. Dispositif (22) selon la revendication 6, **caractérisé en ce que** l'un du support (80) et du système autobloquant (100) comporte une butée (90), l'autre du support (80) et du système autobloquant (100) délimitant un passage oblong de réception de la butée (90).

8. Dispositif (22) selon l'une quelconque des revendications précédentes, **caractérisé en ce que** l'organe d'accrochage (102) comporte une tête (118) d'engagement sur la bride de retenue (40) du deuxième élément (24), la tête d'engagement (118) présentant un pan incliné propre à coopérer avec une surface du deuxième élément (24) pour écarter l'élément de connexion (102) depuis sa configuration contractée de maintien vers sa configuration écartée de mise en place.

9. Dispositif (22) selon l'une quelconque des revendications précédentes, **caractérisé en ce qu'**il comporte une pluralité d'éléments de connexion (82) répartis angulairement autour du support (80).

10. Dispositif (22) selon l'une quelconque des revendications précédentes, **caractérisé en ce qu'**au moins un élément de connexion (82) comporte une pluralité de systèmes autobloquants (100) montés mobiles conjointement lors du passage de l'élément de connexion (82) entre la configuration écartée de mise en place et la configuration contractée de maintien, l'organe d'accrochage (102) comportant au moins une tige (116A, 116B) reçue dans chaque système autobloquant (100).

11. Dispositif (22) selon l'une quelconque des revendications précédentes, **caractérisé en ce que** l'organe d'accrochage comprend une tige (116) formant piston montée mobile dans le système autobloquant (100) et une tête d'accrochage (118) fixée à l'extrémité libre de la tige (116), le système autobloquant (100) maintenant par défaut la tige (116) de chaque organe d'accrochage (102) en position par coopération mécanique.

12. Installation (10) d'exploitation de fluide à travers une étendue d'eau, **caractérisé en ce qu'**elle comporte :
- un tube creux de guidage (24) ;
- un flexible (18) destiné à être introduit dans le tube creux (24), le flexible (18) portant un élément de retenue (20) présentant une bride de retenue (40) disposée à son extrémité inférieure ;
- un dispositif (22) selon l'une quelconque des revendications 1 à 11, le support (80) étant fixé sur l'un de l'élément de retenue (20) et du tube de guidage (24).

13. Installation (10) selon la revendication 12, **caractérisé en ce que** l'élément de retenue (28) comporte une bride d'accostage (66) destinée à être maintenue en contact avec la bride de retenue (40), lorsque les éléments de connexion (82) occupent leur configuration contractée de maintien et lorsque l'organe d'accrochage (102) occupe sa position rétractée.

14. Procédé de fixation axiale d'un premier élément, notamment un élément (20) de retenue de flexible (18) sur un deuxième élément, notamment un tube creux (24), du type comportant les étapes suivantes :
- fourniture d'un dispositif de fixation (22) selon l'une quelconque des revendications 1 à 11, le support (80) étant fixé sur le premier élément (20) ;
- amenée du premier élément (20) au voisinage de la bride de retenue (40) du deuxième élément (24) ;
- passage de chaque élément de connexion (82) dans sa configuration de mise en place dans sa configuration contractée de maintien, puis déplacement de l'organe d'accrochage (102) dans sa position rétractée, en appui sur le deuxième élément (24).

15. Procédé selon la revendication 14, **caractérisé en ce qu'**il comporte, lors de l'amenée du premier élément (20) au voisinage la bride de retenue (40) du deuxième élément (24), le passage de chaque élément de connexion (82) depuis la configuration contractée vers la configuration écartée.

## Patentansprüche

1. Vorrichtung (22) zur axialen Befestigung eines ersten Elements (20) an einem Halteflansch (40) eines zweiten Elements (24), wobei das erste Element (20) und das zweite Element (24) bestimmt sind, in ein Wasservolumen (14) eingetaucht zu sein, wobei die Vorrichtung (22) der Art ist, die umfasst:
- einen Halter (80), der bestimmt ist, an dem ersten Element (20) befestigt zu sein,
- mindestens ein von dem Halter (80) getragenes Verbindungsmittel (82), wobei das Verbindungsmittel (82) bestimmt ist, in den Halteflansch (40) des zweiten Elements (20) einzugreifen, wobei das Verbindungsmittel (82) in Bezug zum Halter (80) zwischen einer beabstandeten Platzierungskonfiguration und einer kontrahierten Haltekonfiguration der Verbindungselemente (82) auf dem zweiten Element (24) radial bewegbar montiert ist,
**dadurch gekennzeichnet, dass** das oder jedes Verbindungsmittel (82) ein Selbstblockierungssystem (100) und ein bewegbares Befestigungsorgan (102) aufweist, wobei das Befestigungsorgan (102) im Selbstblockierungssystem (100) bewegbar montiert ist, wobei die Befestigungsvorrichtung (22) einen Verlagerungsaktuator (104) des Befestigungsorgans (102) im Selbstblockierungssystem (100) zwischen einer ausgefahrenen Position und einer eingefahrenen Position im Selbstblockierungssystem (100) umfasst.

2. Vorrichtung (22) nach Anspruch 1, **dadurch gekennzeichnet, dass** eines von dem ersten Element und dem zweiten Element ein Schlauchhalteelement (20) ist, das in vorteilhafter Weise eine Schlauchversteifung aufweist, wobei das andere von dem ersten Element und dem zweiten Element ein hohles Führungsrohr (24) ist, wobei der Halter (80) einen zentralen Durchgangsraum des Schlauchs begrenzt.

3. Vorrichtung (22) nach Anspruch 1 oder 2, **dadurch gekennzeichnet, dass** der Aktuator (104) von einem Hydraulikzylinder (130) gebildet ist.

4. Vorrichtung (22) nach einem der vorangehenden Ansprüche, **dadurch gekennzeichnet, dass** das Selbstblockierungssystem (100) in Bezug zum Halter (80) zwischen der kontrahierten Haltekonfiguration und der beabstandeten Platzierungskonfiguration schwenkend montiert ist.

5. Vorrichtung (22) nach einem der vorangehenden Ansprüche, **dadurch gekennzeichnet, dass** sie ein Organ (84) der elastischen Beanspruchung jedes Verbindungsmittels (82) in Richtung der kontrahierten Haltekonfiguration aufweist.

6. Vorrichtung (22) nach einem der vorangehenden Ansprüche, **dadurch gekennzeichnet, dass** das Selbstblockierungssystem (100) in Bezug zum Halter (80) zwischen einer tiefen Position und einer hohen Position gemäß einer lokalen Achse des Halters (80) axial bewegbar montiert ist.

7. Vorrichtung (22) nach Anspruch 6, **dadurch gekennzeichnet, dass** entweder der Halter (80) oder das Selbstblockierungssystem (100) einen Anschlag (90) aufweist, wobei anderenfalls entweder der Halter (80) oder das Selbstblockierungssystem (100) einen länglichen Empfangsdurchgang des Anschlags (90) begrenzt.

8. Vorrichtung (22) nach einem der vorangehenden Ansprüche, **dadurch gekennzeichnet, dass** das Befestigungsorgan (102) eine Eingriffskopf (118) in den Halteflansch (40) des zweiten Elements (24) aufweist, wobei der Eingriffskopf (118) eine geneigte Schräge aufweist, die imstande ist, mit einer Fläche des zweiten Elements (24) zusammenzuwirken, um das Verbindungsmittel (102) von seiner kontrahierten Haltekonfiguration in seine beabstandete Platzierungskonfiguration zu beabstanden.

9. Vorrichtung (22) nach einem der vorangehenden Ansprüche, **dadurch gekennzeichnet, dass** sie eine Vielzahl von Verbindungselementen (82) aufweist, die winklig um den Halter (80) verteilt sind.

10. Vorrichtung (22) nach einem der vorangehenden Ansprüche, **dadurch gekennzeichnet, dass** mindestens ein Verbindungsmittel (82) eine Vielzahl von Selbstblockierungssystemen (100) aufweist, die beim Übergang des Verbindungsmittels (82) zwischen der beabstandeten Platzierungskonfiguration und der kontrahierten Haltekonfiguration gemeinsam bewegbar montiert sind, wobei das Befestigungsorgan (102) mindestens eine Stange (116A, 116B) aufweist, die in jedem Selbstblockierungssystem (100) aufgenommen ist.

11. Vorrichtung (22) nach einem der vorangehenden Ansprüche, **dadurch gekennzeichnet, dass** das Befestigungsorgan eine Stange (116), die einen im Selbstblockierungssystem (100) bewegbar montierten Kolben bildet, und einen Befestigungskopf (118), der am freien Ende der Stange (116) befestigt ist, aufweist, wobei das Selbstblockierungssystem (100) die Stange (116) jedes Befestigungsorgans (102) standardmäßig in mechanischer Kooperationsposition hält.

12. Fluidnutzungsanlage (10) durch ein Wasservolumen, **dadurch gekennzeichnet, dass** sie aufweist:
- ein hohles Führungsrohr (24),
- einen Schlauch (18), der bestimmt ist, in das hohle Rohr (24) eingeführt zu sein, wobei der Schlauch (18) ein Halteelement (20) trägt, das einen Halteflansch (40) aufweist, der an seinem unteren Ende angeordnet ist,
- eine Vorrichtung (22) nach einem der Ansprüche 1 bis 11, wobei der Halter (80) entweder am Halteelement (20) oder am Führungsrohr (24) befestigt ist.

13. Anlage (10) nach Anspruch 12, **dadurch gekennzeichnet, dass** das Halteelement (28) einen Dockingflansch (66) aufweist, der bestimmt ist, im Kontakt mit dem Halteflansch (40) gehalten zu sein, wenn die Verbindungselemente (82) ihre kontrahierte Haltekonfiguration einnehmen und wenn das Befestigungsorgan (102) seine eingefahrene Position einnimmt.

14. Verfahren zur axialen Befestigung eines ersten Elements, insbesondere eines Halteelements (20) eines Schlauchs (18) an einem zweiten Element, insbesondere einem hohlen Rohr (24), der Art, die die folgenden Schritte umfasst:
- Bereitstellen einer Befestigungsvorrichtung (22) nach einem der Ansprüche 1 bis 11, wobei der Halter (80) am ersten Element (20) befestigt ist,
- Führen des ersten Elements (20) in die Nähe des Halteflanschs (40) des zweiten Elements (24),
- Übergehen jedes Verbindungsmittels (82) in seiner Platzierungskonfiguration in seine kontrahierte Haltekonfiguration, danach Verlagern des Befestigungsorgans (102) in seine eingefahrene Position in Abstützung auf dem zweiten Element (24).

15. Verfahren nach Anspruch 14, **dadurch gekennzeichnet, dass** es beim Führen des ersten Elements (20) in die Nähe des Halteflanschs (40) des zweiten Elements (24) das Übergehen jedes Verbindungsmittels (82) aus der kontrahierten Konfiguration in die beabstandete Konfiguration aufweist.

## Claims

1. A device (22) for axially attaching a first element (20) to a retaining flange (40) of a second element (24), the first element (20) and the second element (24) being intended to be submerged in an expanse of water (14), the device (22) comprising:
- a holder (80) being intended to be fixed to the first element (20),
- at least one connection element (82) borne by the holder (80), the connection element (82) being intended to engage on the retaining flange (40) of the second element (20), the connection element (82) being mounted with radial mobility in relation to the holder (80) between a separated placement configuration and a contracted configuration for holding the connection elements (82) on the second element (24);
**characterized in that** the or each connection element (82) comprises a self-locking system (100) and a mobile catching member (102), the catching member (102) being mounted with the ability to move in the self-locking system (100), the attachment device (22) comprising an actuator (104) for moving the catching member (102) in the self-locking system (100) between a deployed position and a position in which it is retracted in the self-locking system (100).

2. The device (22) according to claim 1, **characterized in that** one from among the first element and the second element is a flexible line retaining element (20) advantageously including a flexible line stiffener, the other among the first element and the second element being a hollow guide tube (24), the holder (80) delimiting a central space for passage of the flexible line.

3. The device (22) according to claim 1 or 2, **characterized in that** the actuator (104) is formed by a hydraulic cylinder (130).

4. The device (22) according to any one of the preceding claims, **characterized in that** the self-locking system (100) is mounted pivotably relative to the holder (80) between the contracted holding configuration and the separated placement configuration.

5. The device (22) according to any one of the preceding claims, **characterized in that** it includes an elastic biasing member (84) for biasing each connection element (82) toward the contracted holding configuration.

6. The device (22) according to any one of the preceding claims, **characterized in that** the self-locking system (100) is mounted axially movably relative to the holder (80) between a lower position and an upper position along a local axis of the holder (80).

7. The device (22) according to claim 6, **characterized in that** one of the holder (80) and the self-locking system (100) includes a stop (90), the other of the holder (80) and the self-locking system (100) delimiting an oblong passage for receiving the stop (90).

8. The device (22) according to any one of the preceding claims, **characterized in that** the catching member (102) includes an engagement head (118) on the retaining flange (40) of the second element (24), the engagement head (118) having an inclined face capable of cooperating with a surface of the second element (24) to move the connection element (102) away from its contracted holding configuration toward its separated placement configuration.

9. The device (22) according to any one of the preceding claims, **characterized in that** it includes a multiple connection elements (82) angularly distributed around the holder (80).

10. The device (22) according to any one of the preceding claims, **characterized in that** at least one connection element (82) includes multiple self-locking systems (100) mounted movably jointly during the passage of the connection element (82) between the separated placement configuration and the contracted holding configuration, the catching member (102) including at least one rod (116A, 116B) received in each self-locking system (100).

11. The device (22) according to any one of the preceding claims, **characterized in that** the catching member comprises a piston-forming rod (116) movably mounted in the self-locking system (100) and a catching head (118) fixed to the free end of the rod (116), the self-locking system (100) by default keeping the rod (116) of each catching member (102) in position by mechanical cooperation.

12. An installation (10) for exploiting a fluid through an expanse of water, **characterized in that** it comprises:
- a hollow guide tube (24);
- a flexible line (18) intended to be inserted into the hollow tube (24), the flexible line (18) bearing a retaining element (20) having a retaining flange (40) positioned at its lower end;
- a device (22) according to any one of claims 1 to 11, the holder (80) being fixed on one of the retaining element (20) and the guide tube (24).

13. The installation (10) according to claim 12, **characterized in that** the retaining element (28) includes a docking flange (66) intended to be kept in contact with the retaining flange (40), when the connection elements (82) are in their contracted holding configuration and when the attachment member (102) is in its retracted position.

14. A method for axially attaching a first element, in particular an element (20) for retaining a flexible line (18), on a second element, in particular a hollow tube (24), including the following steps:
- providing an attachment device (22) according to any one of claims 1 to 11, the holder (80) being fixed on the first element (20);
- bringing the first element (20) into the vicinity of the retaining flange (40) of the second element (24);
- transitioning each connection element (82) in its placement configuration into its contracted holding configuration, then moving the attachment member (102) into its retracted position, bearing on the second element (24).

15. The method according to claim 14, **characterized in that** when the first element (20) is brought into the vicinity of the retaining flange (40) of the second element (24), it includes the passage of each connection element (82) from the contracted configuration to the separated configuration.
